(19) **Europäisches Patentamt**
**European Patent Office**
**Office européen des brevets**

(11) **EP 3 483 000 B1**

(12) **EUROPÄISCHE PATENTSCHRIFT**

(45) Veröffentlichungstag und Bekanntmachung des Hinweises auf die Patenterteilung:
**30.03.2022 Patentblatt 2022/13**

(21) Anmeldenummer: **18201418.3**

(22) Anmeldetag: **19.10.2018**

(51) Internationale Patentklassifikation (IPC):
**B60N 2/50** (2006.01)    **G01H 1/00** (2006.01)
**G06F 3/0484** (2022.01)    **B60N 2/02** (2006.01)

(52) Gemeinsame Patentklassifikation (CPC):
**B60N 2/50; G01H 1/00; G06F 3/0484;**
B60N 2002/0272

(54) **VERFAHREN UND SYSTEM ZUM BESTIMMEN VON GANZKÖRPER-VIBRATIONEN**

METHOD AND SYSTEM FOR DETECTING WHOLE BODY VIBRATIONS

PROCÉDÉ ET SYSTÈME DE DÉTERMINATION DES VIBRATIONS GLOBALES DU CORPS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2017 DE 102017126300**
**05.06.2018 DE 102018113289**

(43) Veröffentlichungstag der Anmeldung:
**15.05.2019 Patentblatt 2019/20**

(73) Patentinhaber: **GRAMMER AG**
**92289 Ursensollen (DE)**

(72) Erfinder:
• **Übelacker, Roland**
**92536 Pfreimd (DE)**

• **Krivenkov, Konstantin**
**92224 Amberg (DE)**
• **Gissibl, Michael**
**93488 Schönthal (DE)**

(74) Vertreter: **Hannke, Christian**
**Hannke Bittner & Partner**
**Patent- und Rechtsanwälte mbB**
**Prüfeninger Straße 1**
**93049 Regensburg (DE)**

(56) Entgegenhaltungen:
EP-A1- 1 050 749    EP-A2- 1 481 841
EP-A2- 1 752 747    EP-A2- 1 985 979
EP-A2- 1 985 980

**Beschreibung**

Die Erfindung betrifft ein System zum Bestimmen von Ganzkörper-Vibrationen.

Unter Ganzkörper-Vibrationen sind im Allgemeinen mechanische Vibrationen zu verstehen, welche, wenn sie auf einen Körper eines Arbeiters übertragen werden, eine Gefahr für die Gesundheit und die Sicherheit eines Arbeiters darstellen, insbesondere für den Rücken des Arbeiters beziehungsweise für die Wirbelsäule. Dies ist insbesondere für Arbeitsbereiche relevant, in welchen der Arbeiter auf einem Fahrzeugsitz Platz genommen hat und der Fahrzeugsitz Vibrationen ausgesetzt ist. Beispiele hierfür sind Lastkraftwagenfahrer, Landwirte und Stapelfahrer.

Messungen der Ganzkörper-Vibrationen sind gemäß der Verordnung 2002/44/EC des Europäischen Parlaments beziehungsweise gemäß der deutschen Umsetzung der Verordnung zum Schutz der Beschäftigten vor Gefährdungen durch Lärm und Vibrationen (LärmVibrationsArbSchV) notwendig und sollten eingehalten werden. Der Grenzwert oder auch Expositionsgrenzwert A(8) liegt hierbei bei 1,15 m/s$^2$ in x-Richtung und y-Richtung und bei 0,8 m/s$^2$ in z-Richtung. Der Auslösewert beträgt 0,5 m/s$^2$. Es ist jedoch zu beachten, dass in verschiedenen Ländern verschiedene Grenzwerte A(8) und Auslösewerte Bestand haben.

EP 1 752 747 A2 und EP 1 985 980 A2 zeigen jeweils eine Vorrichtung zum Messen und Überwachen von Ganzkörper-Vibrationen, wobei Beschleunigungswerte mittels eines Sensors aufgenommen werden und die entsprechenden Vibrationen und die zugehörige Ganzkörper-Vibrationsanzeige bestimmt werden, welcher Wert der Ganzkörper-Vibration bisher erreicht wurde.

EP 1 481 841 A2 offenbart ein System mit Beschleunigungssensoren, die Bewegungen wie z. B. eine Vibration und/oder Beschleunigung messen. Die Beschleunigungsaufnehmer befinden sich unter einem Sitzbezug und einem Rückenlehnenbezug.

Es ist somit Aufgabe der Erfindung, ein System zum Bestimmen von Ganzkörper-Vibrationen bereitzustellen.

Diese Aufgabe wird durch ein System mit den Merkmalen gemäß Anspruch 1 gelöst.

Zusätzlich zu dem erfindungsgemäßen System wird ein nicht beanspruchtes Verfahren zum Bestimmen von Ganzkörper-Vibrationen beschrieben, wobei das Verfahren die Verfahrensschritte umfasst:

a) Messen von Beschleunigungen eines Fahrzeugsitzes in x-, y- und z-Richtung mittels mindestens eines Sensors;
b) Übertragen der Beschleunigungsmesswerte an eine Recheneinheit mittels einer Übertragungseinheit;
c) Bestimmen eines Wertes einer bisherigen Exposition an Ganzkörper-Vibrationen mittels der Recheneinheit unter Verwendung der Beschleunigungsmesswerte.

Dabei entsprechen die x-, y- und z-Richtung der longitudinalen Richtung, der lateralen Richtung und der vertikalen Richtung des Fahrzeugsitzes.

Der mindestens eine Sensor ist dabei ausgebildet und vorgesehen, die Beschleunigungen in der jeweiligen Richtung zu messen. Es ist dabei denkbar, dass ein Sensor alle Richtungen misst oder für jede Richtung ein separater Sensor vorgesehen ist, das heißt, dass insbesondere drei Sensoren vorgesehen sind.

Unter dem Begriff "bisherige Exposition" ist dabei die Exposition zu verstehen, die der Fahrer insgesamt bisher ausgesetzt war. Das heißt, dass, grob gesagt, alle bisherigen Expositionswerte summiert werden und ständig aktualisiert werden im Laufe der Zeit. Dabei werden aus den Beschleunigungsmesswerten zugehörige Expositionen bestimmt, welche dann summiert werden. Somit kann leicht Auskunft darüber gegeben werden, welchen Wert an Exposition der Fahrer seit Beginn der Tätigkeit ausgesetzt war und welchen Wert an Exposition noch verbleibend ist.

Gemäß einer bevorzugten Ausführungsform handelt es sich bei dem Messen der Beschleunigungen um ein kontinuierliches Messen. Das heißt, dass in regelmäßigen Zeitabständen Beschleunigungsmesswerte aufgenommen werden, wobei ein Zeitabstand zwischen 1 ms und 10 ms liegt, bevorzugter zwischen 1 ms und 5 ms und besonders bevorzugt zwischen 1 ms und 2 ms. Durch ein derartiges Messverfahren ist es daher möglich, ein möglichst genaues Ergebnis für die bisherige Exposition zu erhalten.

Erfindungsgemäß ist es vorgesehen, dass die Beschleunigungsmesswerte an die Recheneinheit kabellos übertragen werden, wobei die kabellose Übertragung mindestes eines ist aus WLAN, NFC, Bluetooth oder eine Kombination daraus. Insbesondere wird Bluetooth bevorzugt.

Weiter erfindungsgemäß ist es vorgesehen, dass die Recheneinheit in einem mobilen Endgerät, beispielsweise Smartphone, Tablet oder Laptop angeordnet ist. Durch die kabellose Übertragung lassen sich besonders einfach die aufgenommenen Beschleunigungsmesswerte an die Recheneinheit übertragen.

Das nicht beanspruchte Verfahren kann einen weiteren Verfahrensschritt aufweisen:

d) Bestimmen eines Wertes einer momentanen Exposition an Ganzkörper-Vibrationen mittels der Recheneinheit unter Verwendung der Beschleunigungsmesswerte.

Unter einer momentanen Exposition ist dabei zu verstehen, dass bei der aktuell einwirkenden Kraft, welche einhergeht mit einer Beschleunigung, die zugehörige aktuelle Exposition gemeint ist. Hierdurch kann beispielsweise angegeben werden, dass in der momentanen Fahrsituation besonders hohe Werte an Exposition erreicht werden und diese vermieden werden sollten. Es ist auch denkbar, dass unter Verwendung der momentanen Exposition bestimmt wird, wie lange der Fahrer einer derartigen Exposition ausgesetzt sein kann, bevor der Grenzwert überschritten wird.

Das nicht beanspruchte Verfahren kann einen weiteren Verfahrensschritt aufweisen:

e) Abspeichern der Beschleunigungswerte, der Werte der bisherigen Exposition und gegebenenfalls der momentanen Exposition in einer Speichereinheit.

Durch das Abspeichern der jeweiligen Werte kann eine Evaluation durchgeführt; insbesondere ist dies vorteilhaft, wenn eine Überschreitung des Grenzwerts vorliegt und eine Verbesserung der Arbeitsbedingungen notwendig wird.

Das nicht beanspruchte Verfahren kann einen weiteren Verfahrensschritt aufweisen:

f) Anzeigen des Werts der bisherigen Exposition und gegebenenfalls der momentanen Exposition mittels einer Anzeigeeinheit.

Dabei ist es besonders vorteilhaft, dass der Wert der bisherigen Exposition der letztmals bestimmte Wert der bisherigen Exposition ist, so dass ein möglichst genauer Wert angezeigt wird.

Erfindungsgemäß wird die zugrunde liegende Aufgabe gelöst von einem System zum zum Bestimmen von Ganzkörper-Vibrationen, wobei das System mindestens einen Sensor, eine Recheneinheit, eine Übertragungseinheit, eine Speichereinheit und eine Anzeigeeinheit aufweist.

Erfindungsgemäß ist der mindestens eine Sensor ausgebildet und dazu vorgesehen, Beschleunigung eines Fahrzeugsitzes in x-, y- und z-Richtung aufzunehmen. Die Recheneinheit ist ausgebildet und vorgesehen, Werte der bisherigen und gegebenenfalls momentanen Exposition zu bestimmen bzw. zu ermitteln. Die Übertragungseinheit ist ausgebildet und dazu vorgesehen, die aufgenommenen Beschleunigungsmesswerte an die Recheneinheit zu übertragen. Die Speichereinheit ist ausgebildet und dazu vorgesehen, die Beschleunigungsmesswerte, die Werte der bisherigen Exposition und gegebenenfalls der momentanen Exposition abzuspeichern. Die Anzeigeeinheit ist ausgebildet und dazu vorgesehen, den Wert der bisherigen Exposition und gegebenenfalls der momentanen Exposition anzuzeigen.

Weiter ist bevorzugt eine Recheneinheit vorgesehen, welche ausgebildet und vorgesehen ist, mittels der gemessenen Beschleunigungen in der x-Richtung, der y-Richtung und der z-Richtung entsprechende bisher erreichte A(8)-Werte in der x-Richtung, der y-Richtung und der z-Richtung zu bestimmen, welche beispielsweise mit $A(8)_x$, $A(8)_y$ und $A(8)_z$ bezeichnet werden können. Bei den ermittelten A(8)-Werten handelt es sich, wie bereits erwähnt, um eine Berechnung der bisher erreichten Exposition, das heißt, dass die A(8)-Werte die bisherige Vibrationsexposition angeben. Die Recheneinheit kann sich außerhalb des Fahrzeugsitzes oder Nutzfahrzeugsitzes befinden.

Weiter vorzugsweise weist das System eine Übertragungseinheit auf, welche ausgebildet und vorgesehen ist, die von dem Sensor gemessenen Beschleunigungswerte an die Recheneinheit zu übertragen. Erfindungsgemäß ist eine kabellose Übertragung durch die Übertragungseinheit vorgesehen, wobei die kabellose Übertragung mindestens eines ist aus WLAN, NFC, Bluetooth oder eine Kombination daraus. Die Übertragungseinheit ist im Fahrzeugsitz oder Nutzfahrzeugsitzes integriert .

Besonders bevorzugt weist das System eine Anzeigeeinheit auf, welche vorgesehen und ausgebildet ist, bestimmte Werte, die mittels den Beschleunigungswerten bestimmbar sind, anzuzeigen. Derartige Werte können beispielsweise die Reserve der Exposition sein, das heißt, der Wert, welcher anzeigt, wie viel Schwingungsexposition noch erlaubt ist. Der Wert der Reserve berechnet sich hierbei aus dem Grenzwert der Exposition minus der bisherigen Exposition. Ein weiterer Wert könnte die momentane Exposition sein, welche sich aus der Ableitung der bisherigen Exposition berechnet.

Weiter ist es denkbar, ausgehend von der Normierung der Exposition auf einen acht Stunden Tag, die Zeit berechenbar ist, bis der Auslösewert oder der Expositionsgrenzwert erreicht wird. Diese Zeit ist dabei natürlich abhängig von der momentanen Exposition und der bisherigen Exposition.

Besonders bevorzugt werden die Werte der momentanen Exposition und der bisherigen Exposition mittels der Anzeigeeinrichtung in der Art einer Tankanzeige angezeigt, wobei der Beginn der Arbeit einen vollen Tank anzeigt und der Auslösewert einen Tank mit einem Rest anzeigt, vergleichbar mit der Reserve eines Tanks. Wird der Expositionsgrenzwert erreicht, so ist der Tank geleert. Weiter können Empfehlungen angezeigt werden, mittels welcher die Vibrationsexposition beeinflusst werden kann, beispielsweise durch Aufforderung zu einer langsameren Fahrt oder einer Verstellung der Dämpfereinstellung.

Besonders bevorzugt weist das System auch eine Speichereinheit auf, mittels welcher die gemessenen Werte der Beschleunigungen, der momentanen Exposition und der bisherigen Exposition abspeicherbar sind. Dadurch können die Werte auch zu einem späteren Zeitpunkt erneut ausgewertet werden, um eine Verbesserung der Schutzmaßnahmen gegenüber Vibrationen zu erzielen. Weiter kann eine verlässliche Anzeige bzw. Berechnung der momentanen und bisherigen Exposition bereitgestellt werden.

Erfindungsgemäß ist der mindestens eine Sensor innerhalb eines Fahrzeugsitzes angeordnet. Innerhalb bedeutet insbesondere, dass der mindestens eine Sensor durch Teile des Fahrzeugsitzes verdeckt ist und nicht von außen erkannt wird. Weiter bevorzugt ist der mindestens eine Sensor innerhalb eines Sitzteils des Fahrzeugsitzes angeordnet. Hierdurch ist es möglich, die Beschleunigungen des Fahrzeugsitzes möglichst genau aufzunehmen.

Ebenso ist es erfindungsgemäß vorgesehen, dass die Übertragungseinheit innerhalb des Fahrzeugsitzes angeordnet ist. Die Übertragungseinheit steht dabei in signaltechnischer Verbindung mit dem mindestens einen Sensor.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:

Fig. 1     System zum Bestimmen von Ganzkörper-Vibrationen gemäß einer Ausführungsform;

Fig. 2     ein nicht beanspruchtes Verfahren zum Bestimmen von Ganzkörper-Vibrationen;

Fig. 3     Bestimmung der Exposition;

Fig. 4     mögliche Anzeige einer Anzeigeeinheit;

Fig. 5     graphische Übersicht über die Exposition.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

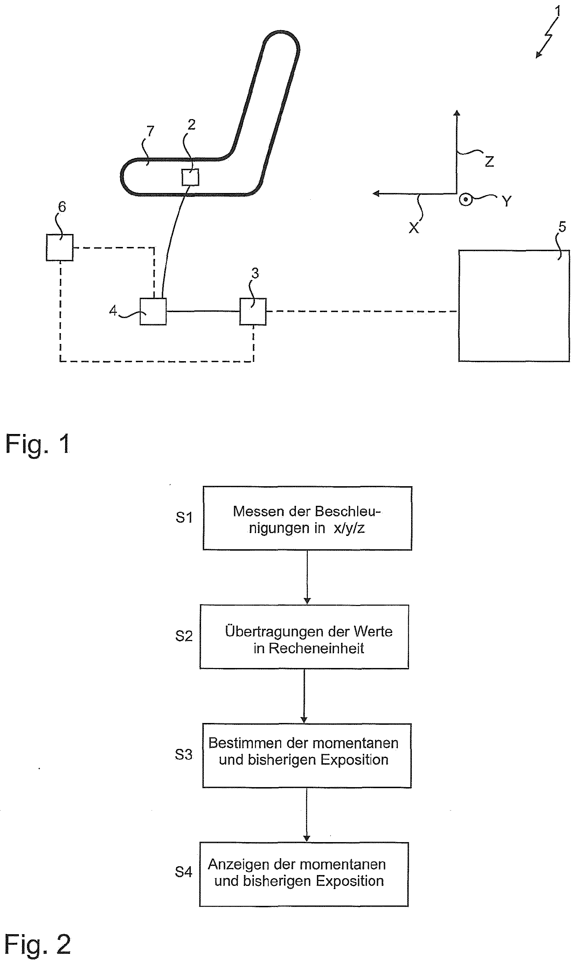

Die Figur 1 zeigt ein System 1 mit mindestens einem Sensor 2, welcher in einem Fahrzeugsitz 7 integriert ist, wobei es auch denkbar ist, dass der Sensor 2 lediglich mit dem Fahrzeugsitz 7 verbunden ist. Der mindestens eine Sensor 2 ist innerhalb des Fahrzeugsitzes 7 angeordnet. Vorliegend ist in der Figur 1 der mindestens eine Sensor 2 in einem Sitzteil 14 des Fahrzeugsitzes 7 angeordnet.

Weiter sind eine Recheneinheit 3, eine Übertragungseinheit 4, eine Speichereinheit 6 und eine Anzeigeeinheit 5 des Systems 2 vorgesehen.

Der mindestens eine Sensor 2 ist ausgebildet und vorgesehen, Beschleunigung in x-, y- und z-Richtung zu erfassen, das heißt im vorliegenden Fall, Beschleunigungen, welche auf den Fahrzeugsitz 7 und entsprechend auf die auf dem Fahrzeugsitz 7 sitzende Person wirkt. Es ist ebenso denkbar, dass drei Sensoren 2 vorgesehen sind, wobei jeder der Sensoren 2 eine Beschleunigung in einer bestimmten Richtung x, y, z erfassen kann.

Die vom Sensor 2 aufgenommenen Beschleunigungswerte werden anschließend von einer Übertragungseinheit 4 an die Recheneinheit 3 übermittelt. Dabei stehen die Übertragungseinheit 4 und die Recheneinheit 3 kabellos in signaltechnischer Verbindung, beispielsweise über WLAN, NFC oder bevorzugter Bluetooth. Weiter steht die Übertragungseinheit 4 in signaltechnischer Verbindung mit dem mindestens einen Sensor 2, und weiter ist die Übertragungseinheit 4 innerhalb des Fahrzeugsitzes 7 angeordnet.

Die Recheneinheit 3 verarbeitet die Werte der Beschleunigungen derart, dass die bisherige Exposition und/oder die momentane Exposition bestimmt werden können. Dabei beschreibt der Wert der bisherigen Exposition, welchen Vibrationen der Arbeiter bisher ausgesetzt ist/war, und der Wert der momentanen Exposition, welchen Vibrationen der Arbeiter momentan beziehungsweise aktuell ausgesetzt ist.

Die Werte der momentanen Exposition beziehungsweise der bisherigen Exposition können mittels der Anzeigeeinrichtung 5 dem Arbeiter angezeigt werden, wodurch er einen Überblick über die momentane und bisherige Exposition hat.

Weiter ist eine Speichereinheit 6 dargestellt, welche mit der Übertragungseinheit 4 sowie der Recheneinheit 3 in signaltechnischer Verbindung steht, wobei in der Speichereinheit 6 zumindest die Werte der gemessenen Beschleunigungen und der momentanen und bisherigen Exposition abspeicherbar sind.

Die Figur 2 offenbar ein nicht beanspruchtes Verfahren zum Bestimmen von Ganzkörper-Vibrationen gemäß einer Ausführungsform, umfassend die Verfahrensschritte:

S1) Messen von Beschleunigungen in der x-Richtung, y-Richtung und z-Richtung mittels des Sensors,

S2) Übertragen der Messwerte der Beschleunigungen an eine Recheneinheit mittels einer Übertragungseinheit,

S3) Bestimmen des Wertes der bisherigen Exposition und gegebenenfalls der momentanen Exposition mittels der Recheneinheit,

S4) Anzeigen der Werte der bisherigen Exposition und gegebenenfalls der momentanen Exposition mittels der Anzeigeeinheit.

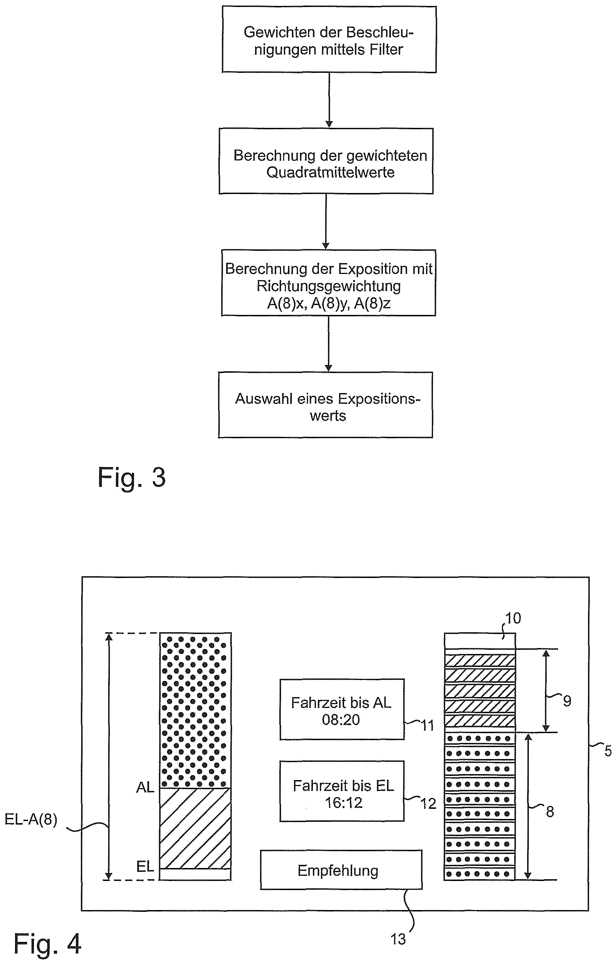

In der folgenden Figur 3 wird die Bestimmung der bisherigen Exposition beziehungsweise der momentanen Exposition genauer dargestellt, was insbesondere dem Verfahrensschritt S3 entspricht.

Zunächst werden die durch den mindestens einen Sensor 2 aufgenommenen Beschleunigungswerte, in x-, y- und z-Richtung, $a_x$, $a_y$ und $a_z$ mittels einer Gewichtung $W_d$ für x- und y-Richtung und einer Gewichtung $W_k$ in z-Richtung gewichtet. Dabei werden die Frequenzen stärker bewertet, welche den Eigenfrequenzen des Körpers entsprechen.

Anschließend werden die aus den gewichteten Beschleunigungswerten $a_x$, $a_y$ und $a_z$ die Quadratmittelwerte der gewichteten Werte bestimmt und mit $a_{wx}$, $a_{wy}$ und $a_{wz}$ bezeichnet. Ein Quadratmittelung wird hierbei verwendet, um Spitzen nach oben stärker zu bewerten.

Mittels dieser gewichteten Werte $a_{wx}$, $a_{wy}$ und $a_{wz}$ werden die jeweiligen Expositionswerte $A(8)_x$, $A(8)_y$ und $A(8)_z$ bestimmt, mittels der nachstehenden Berechnungsformel:

$$A_l(8) = k_l \sqrt{\frac{1}{T_0} \sum_i a_{wli}^2 \, T_i}$$

wobei $l = x, y, z$ und $T_i$ einen Messzeitpunkt bezeichnet. Weiter bezeichnet $k_l$ einen Gewichtungsfaktor für die jeweilige Richtung, wobei $k_x = k_y = 1{,}4$ und $k_z = 1{,}0$ ist. Dabei ist $T_0$ eine Zeitnormierung und ist gleich acht Stunden oder der jeweiligen Zeit einer Schicht.

Aus den erhaltenen Werten $A(8)_x$, $A(8)_y$ und $A(8)_z$ wird ein einzelner Wert bestimmt, welcher dem maximalen Wert der bisherigen Exposition entspricht, das heißt, welcher Wert näher am Expositionsgrenzwert für die jeweilige Richtung ist.

Die jeweiligen Schritte sind in der Figur 3 mit S10, S20, S30 und S40 bezeichnet.

Eine bevorzugte Anzeige ist der Figur 4 zu entnehmen, welche die Anzeigeeinheit 5 darstellt, mittels welcher verschiedene Werte dargestellt sind.

Dabei wird auf der linken Seite der Wert angezeigt, welcher dem Wert der noch zur Verfügung stehenden Vibrationsaufnahme entspricht, das heißt, berechnet durch den Expositionsgrenzwert minus dem Wert der bisherigen Exposition.

Auf der rechten Seite erkennt man den Wert der momentanen Exposition, welcher einen ersten Bereich 8 und einen zweiten Bereich 9 aufweist, wobei der erste Bereich 8 Werte der momentanen Exposition darstellt, welche als nicht sonderlich stark eingestuft werden. Liegen die Werte im zweiten Bereich 9, so sind die Werte der momentanen Exposition erheblich, und oberhalb des zweiten Bereiches 9 in einem dritten Bereich 10 gefährlich für die Gesundheit und Sicherheit des Arbeiters.

Darüber hinaus sind ein erster Anzeigebereich 11, ein zweiter Anzeigebereich 12 und ein dritter Anzeigebereich 13 zu erkennen, wobei der erste Anzeigebereich 11 die verbleibende Fahrzeit angibt bis zum Erreichen des Auslösewerts AL unter Berücksichtigung der momentanen Exposition. Verändert sich die momentane Exposition, so verändert sich ebenso die verbleibende Fahrzeit. Erhöht sich beispielsweise die momentane Exposition, so verringert sich die verbleibende Fahrzeit. Der zweite Anzeigebereich 12 gibt die verbleibende Fahrzeit bis zum Erreichen des Expositionsgrenzwerts EL an, wobei auch diese Zeit abhängig ist von der momentanen Exposition. Im dritten Anzeigebereich 13 kann optional eine Anzeige dargestellt werden, mittels welcher dem Arbeiter eine bestimmte Aktion empfohlen wird, um die momentane Exposition zu verringern. Denkbar sind hierbei beispielsweise Aufforderungen wie "Geschwindigkeit anpassen" oder "Dämpfereinstellung anpassen", wobei als Beispiele davon "langsamer fahren", "schneller fahren", "weichere Dämpfung verwenden" oder "härtere Dämpfung verwenden" sein können.

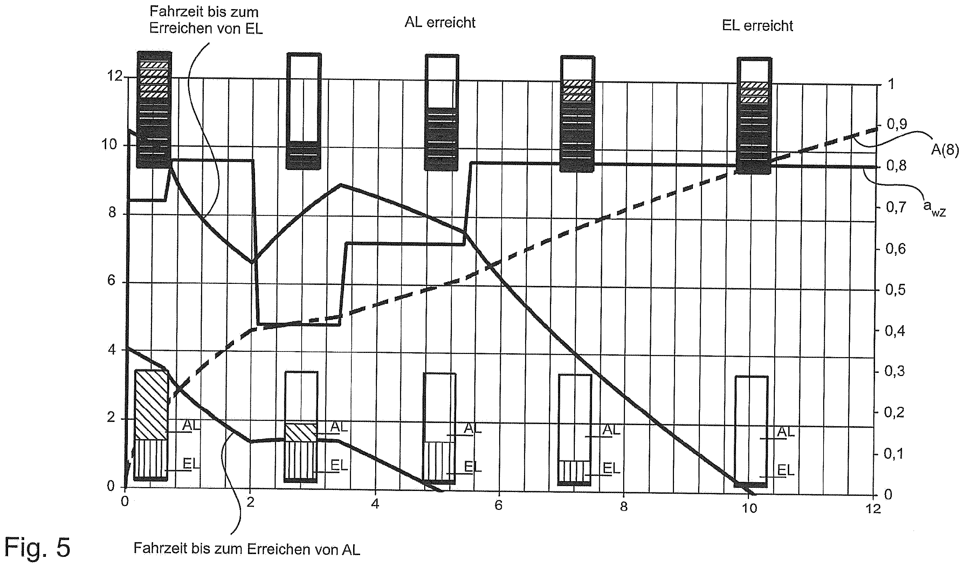

Die Figur 5 zeigt dabei beispielhaft einen Graphen mit dem Verlauf der Fahrzeit bis zum Erreichen des Auslösewerts AL, die Fahrzeit bis zum Erreichen des Expositionsgrenzwerts EL, die momentane Exposition $a_{wz}$ in z-Richtung und die bisherige Exposition $A(8)$.

Bezugszeichenliste

1     System
2     Sensor
3     Recheneinheit
4     Übertragungseinheit
5     Anzeigeeinheit
6     Speichereinheit
7     Fahrzeugsitz
8     erster Bereich
9     zweiter Bereich
10     dritter Bereich
11     erster Anzeigebereich
12     zweiter Anzeigebereich
13     dritter Anzeigebereich
14     Sitzteil

**Patentansprüche**

1. System (1) zum Bestimmen von Ganzkörper-Vibrationen,
   **dadurch gekennzeichnet, dass**
   das System mindestens einen Sensor (2) zum Messen von Beschleunigungen eines Fahrzeugsitzes (7) in x-, y- und z-Richtung, eine Übertragungseinheit (4) zum kabellosen Übertragen der aufgenommenen Beschleunigungsmesswerte an eine Recheneinheit (3), wobei die kabellose Übertragung mindestens eines ist aus WLAN, NFC, Bluetooth oder eine Kombination daraus, wobei die Recheneinheit (3) ausgebildet und vorgesehen ist zum Bestimmen eines Wertes einer bisherigen Exposition an Ganzkörper-Vibrationen unter Verwendung der Beschleunigungsmesswerte, eine Speichereinheit (6) und eine Anzeigeeinheit (5) umfasst, und wobei der mindestens eine Sensor (2) und die Übertragungseinheit (4) innerhalb des Fahrzeugsitzes (7) angeordnet sind und die Recheneinheit (3) in einem mobilen Endgerät angeordnet ist.

**Claims**

1. System (1) for detecting whole body vibrations,
   **characterised in that**
   the system comprises at least one sensor (2) for measuring accelerations of a vehicle seat (7) in x-, y- and z-direction, a transmission unit (4) for wireless transmission of the measured acceleration measurement values to a computing unit (3), wherein the wireless transmission is at least one of WLAN, NFC, Bluetooth or a combination thereof, wherein the computing unit (3) is provided and designed to detect a value of a previous exposition of whole body vibrations by use of the acceleration measurement values, a memory unit (6) and a display unit (5), and wherein the at least one sensor (2) and the transmission unit (4) are arranged within the vehicle seat (7) and the computing unit (3) is arranged in a mobile end device.

**Revendications**

1. Système (1) pour la détermination de vibrations globales du corps,
   **caractérisé par le fait que**
   le système comporte au moins un capteur (2) pour la mesure d'accélérations d'un siège de véhicule (7) dans les directions x, y et z, une unité de transmission (4) pour la transmission sans fil des valeurs de mesure d'accélération reçues à une unité de calcul (3), la transmission sans fil étant au moins l'une parmi WLAN, NFC, Bluetooth ou une combinaison de celles-ci, l'unité de calcul (3) étant conçue et prévue pour la détermination d'une valeur d'une exposition précédente aux vibrations globales du corps avec utilisation des valeurs de mesure d'accélération, une unité de mémoire (6) et une unité d'affichage (5), et ledit au moins un capteur (2) et l'unité de transmission (4) étant disposés à l'intérieur du siège de véhicule (7), et l'unité de calcul (3) étant disposée dans un terminal mobile.

Fig. 1

| | |
|---|---|
| S1 | Messen der Beschleu-nigungen in x/y/z |
| S2 | Übertragungen der Werte in Recheneinheit |
| S3 | Bestimmen der momentanen und bisherigen Exposition |
| S4 | Anzeigen der momentanen und bisherigen Exposition |

Fig. 2

Fig. 3

Fig. 4

A(8)

$a_{wZ}$

EL erreicht

AL erreicht

Fahrzeit bis zum
Erreichen von EL

AL

EL

AL

EL

AL

EL

AL

EL

AL

EL

Fahrzeit bis zum Erreichen von AL

Fig. 5

9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1752747 A2
- EP 1985980 A2
- EP 1481841 A2